# EUROPEAN PATENT SPECIFICATION

(11) **EP 2 736 032 B1**
(45) Date of publication and mention of the grant of the patent: **18.03.2020**
(21) Application number: 12817941.3
(22) Date of filing: 20.07.2012
(51) Int. Cl.: G09F 13/00, G09F 7/16, G09F 13/04, G09F 13/22, G09F 13/18

(54) **THREE-DIMENSIONAL SIGNBOARD**
DREIDIMENSIONALES SCHILD
PANNEAU DE SIGNALISATION EN TROIS DIMENSIONS

(30) Priority: 22.07.2011 CN 201110207215
(43) Date of publication of application: 28.05.2014
(73) Proprietor: Wujiang Yuxing Metal Art Decoration Co., Ltd., Jiangsu 215214 (CN)
(72) Inventor: SHEN, Xinghua, Wujiang Jiangsu 215214 (CN)
(74) Representative: Dilg, Haeusler, Schindelmann Patentanwaltsgesellschaft mbH
(86) International application number: PCT/CN2012/078916
(87) International publication number: WO 2013/013596

(56) References cited:
- CN-A- 101 656 032
- CN-A- 102 081 887
- CN-A- 102 081 887
- CN-A- 102 254 486
- CN-U- 201 853 448
- CN-U- 202 110 728
- CN-U- 202 178 027
- US-A- 3 566 525
- US-A- 3 675 355
- US-A- 4 970 816

## Description

### Technical Field

The present invention relates to the field of advertising products, particularly to a three-dimensional signboard.

### Background

Nowadays, in the city signboard identification lighting technology, metal signboards are beautiful in daytime and glow at night with a strong stereoscopic effect. The metal signboards are durable and meet the trends of city signboards. Currently, traditional convex surface signboards, parallel surface signboards, metal shell reflective signboards, the metal shell planar surface luminous signboards, and the plexiglass material front luminous signboards are used as basic luminous signboards, which has the defects of bad visual effect in daytime, sameness shape, less stereoscopic effect at night, not beautiful enough, and the like. In addition, when the observer is far from the signboard, e.g. the signboard is set on top of high buildings, or the observer recognizes the signboard with a long distance, the observer is difficult to recognize accurately since the signboard is lack of brightness or the brightness thereof is not concentrated adequately.

CN 102 081 887 A describes a three-dimensional metal character and a making method thereof.

US 3 675 355 A describes a molding strip employed to support a translucent or transparent member.

CN 101 656 032 A describes a multilayer three-dimensional topping luminous character and a production technique thereof.

US 4 970 816 A describes an illuminated sign according to the preamble of claim 1, that comprises a single piece molded plastic front, intermediate, and rear frame members which are substantially coextensive with the width of the sign.

### Summary

### (I) the technical problems to be solved

Technical problems sought to be solved by the present invention is to improve the visual effect, stereoscopic effect, durability of the signboard in daytime, and identifiable display effect of the signboard at night; and further to improve the accuracy of the long distance recognizing of the signboard at night.

### (III) the technical solutions

In order to solve the technical problem above, the present invention provides a three-dimensional signboard, according to claim 1. This signboard comprises:
an upper unit and a lower unit which are connected to each other;
the upper unit comprising a main portion, wherein the main portion reflects each stroke of the shape of the character of the signboard and thereby presents the shape of the three-dimensional signboard;
the lower unit comprising a sidewall connected to the main portion, wherein the sidewall encircles the main portion for supporting the main portion, and a cavity is formed therebetween; and
a connecting portion arranged between the main portion and the sidewall, wherein the connecting portion comprise a plurality of step layers arranged in stack, and the step layer each comprises an upper step plate and a lower step plate which are connected to each other. Hereby,
an edge of the upper step plate of a lower step layer in the plurality of step layers is connected to an edge of the lower step plate of an upper step layer connected to the lower step layer,
the size of the lower step layer is larger than the size of the connected upper step layer, such that the step layers of the plurality of step layers arranged in stack are gradually enlarged from top to bottom,
the sidewall and the connecting portion are made of metal, and the surfaces of the sidewall and the connecting portion, or a part or the entire region thereof are perforated,
the surface of the main portion is flat, and
the surface of the main portion or a part or the entire region thereof is perforated.

According to an embodiment of the present invention, the bottom of the sidewall is provided with a mounting plate, on which a light-emitting element is mounted.

According to an example in order to obtain a better understanding of the present invention, a method for manufacturing the three-dimensional signboard above comprising the following steps:
S1: producing the main portion meeting size scale requirement and wood or Chevron board mold of the uppermost step layer connected thereto according to the sketch of the signboard;
S2: dividing the mold of the uppermost step layer into one or more regional components with different identification tags;
S3: covering the surfaces of the main portion and each regional component of the uppermost step layer with rubbing material to obtain an extension unit of the main portion and the plane extension units corresponding to each regional component of the uppermost step layer, each plane extension unit is labeled with a tag as same as that of the regional component corresponding thereto;
S4: based on the number and size of the step layers of the connecting portion needed to be produced, scaling the plane extension units according to the rubbing material in step S3; and trimming the scaled plane extension units so that the plane extension units connected according to the tags will have a shape similar to that of the mold of the uppermost step layer;
S5: cutting the scaled and trimmed plane extension units, then labeling them with tags as same as that of the plane extension units corresponding thereto, and cutting the board needed by the main portion;
S6: welding the boards corresponding to the main portion and each regional component of the step layer according to the order of the tags based on the signboard pattern to form the main portion for reflecting the identification shape of the three-dimensional signboard of the upper unit and the connecting portion as a whole; and
S7: cutting the sidewall boards with required length and width from the raw board according to the size of the bottom edge of the downmost step layer connected to the side walls; and welding the side wall boards with the downmost step layer to form the whole three-dimensional signboard.

Wherein, in case the connecting portion comprises a plurality of step layers, the plane extension units corresponding to each regional component of step layer are scaled according to the size of the rubbing material in step S3.

Wherein, the rubbing material is sticky note or paste paper.

Wherein, the welding process is argon-arc welding, electric welding, aluminum soldering, or tin soldering.

Wherein, perforating the plane extension units corresponding to the main portion and step layers in the type of hollowed.

Wherein, the main portion is made of plexiglass plate material, and the step layers and the sidewall are made of metal.

### (III) the beneficial effects

For the signboard provided by the technical solutions above, the shape of the signboard is presented by the main portion; the main portion is connected to the side walls by step layers in stack; and the connecting portion are supported by the side walls to enhance stereoscopic effect. The connecting portion and the sidewall are made of metal, so that the signboard has a better display effect in the daytime, and is more durable. In order to improve the display effect at night, mounting plate with light-emitting elements attached thereto is provided in the bottom of the sidewall; the main portion is made of transparent material; and at least parts of the regions of the connecting portion and the sidewall are perforated for revealing light and displaying signboard profile clearly, so as to provide more accurate identifying effect thereof. In the manufacture method described above, only one mold is needed to make the stacked step layers; the size of each of the step layers is scaled according to the mold; materials is cut from the raw boards; then finished by welding; and thus shorten the production process, save the material, and the produced signboard is more beautiful.

### Brief Description of the Drawings

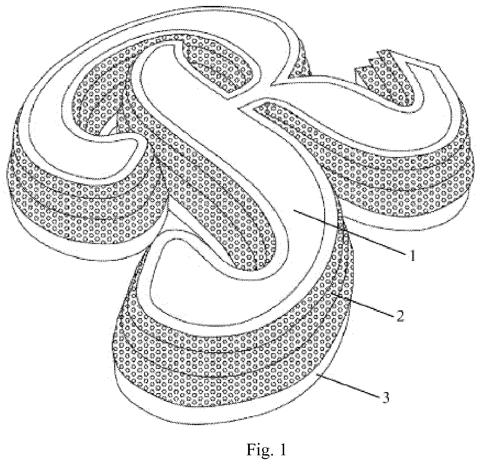

Figure 1 is a schematic structural diagram of a three-dimensional signboard according to the first embodiment of the present invention.

### Reference numbers:

- 1: main portion
- 2: connecting portion
- 3: sidewall

### Detailed Description of the Preferred Embodiments

Specific embodiments of the present invention are described in further detail below in conjunction with the drawings and embodiments. The following embodiments are intended to illustrate the present invention only, but not to limit the scope of the present invention.

### Embodiment

The technical solution of this embodiment is applicable not only to three-dimensional word signboard, but also applicable to a variety of regular or irregular pattern shape of signboards. This embodiment takes three-dimensional characters, to introduce the specific structure of the signboard.

Figure 1 shows a schematic diagram of the structure of the signboard according to the present embodiment. Take an art shaped capital letters R as an example, to manufacture the signboard. The three-dimensional signboard comprises an upper unit and a lower unit, which are connected to each other by welding. The upper unit comprises a main portion 1 for reflecting each stroke of the letter in the signboard. The lower unit comprises a sidewall 3 connected to the main portion 1, wherein the sidewall 3 encircles the main portion 1 for supporting the main portion 1, and a cavity is formed therebetween. In order to enhance the stereoscopic effect, a connecting portion 2 is arranged between the main portion 1 and the sidewall 3. The connecting portion 2 is in a shape of steps; and comprises a plurality of step layers arranged in stack, and the step layers each comprises an upper step plate and a lower step plate which are connected to each other. The upper and lower step plates are combined to form a step layer, wherein the shape of the cross section of the step layer approximates to ridge shape. The so called "ridge shape" means the upper ends of two slopes are connected and forming a structure with the shape of the cross-section thereof approximates to triangle shape.

In order to enhance the stereoscopic effect, the step layer connected to the main portion 1 is labeled as the uppermost step layer, which has the smallest size; and the step layer connected to the sidewall 3 is labeled as the downmost step layer, which has the biggest size. The step layers between the uppermost step layer and the downmost step layer each has a size bigger in scale than that of the upper one.

In order to diversify the signboards, the surface of the main portion 1 is configured as flat plate, curved plate, or "ridge-shaped" convex plate. The surface of the main portion 1 can be configured in the type of sealed, or the upper region or the entire region of the surface is in the type of hollowed. In order to enhance the stereoscopic effect, the main portion is made of colored liner board, such as plexiglass or the like, and is sprayed or screen printed a variety of patterns. The surfaces of the sidewall 3 and the connecting portion 2 are configured in the type of sealed, or a part or the entire region thereof is configured in the type of hollowed. In order to enhance the strength and durability, the sidewall 3 and the connecting portion 2 are made of metal. For the hollowed surfaces described above, the hollowed pattern can be any shape, such as circles, triangles, polygons, grids, heart-shaped, and the like.

The signboard structure in the embodiment above can be applied to three-dimensional fabrication of Chinese characters, English letters, Arabic numerals, etc., as well as special symbols and patterns production.

In order to use signboard according to the above-described embodiment for enhancing the identification effect in nighttime, mounting plate is set in the bottom of the sidewall 3. Light-emitting elements are provided on the mounting plate. The light emitting elements can be one or more of LED light source, neon light, or incandescent lamp. By setting the power and color of the light emitting element, and controlling the brightness adjustment of the light emitting element, diversification of the light emitting performance of the signboard can be obtained, which is more beautiful.

### Example

The present example is given in order to obtain a better understanding of the invention. It provides a method for making the signboard based on the first embodiment. The method of this example is applicable to the producing of signboards with stacked step layers between the main portion and the sidewall. The following example is made based on capital letters R in art front shown in Figure 1 to introduce the producing method of the signboard, which includes the following steps:
S1: producing the main portion meeting size scale requirement and wood or Chevron board mold of the uppermost step layer connected thereto according to the sketch of the signboard.
Specifically, mold of letter R including the main portion and the uppermost step layer of the signboard is made with molding material, which is not easily to be deformed, such as the Chevron board or machine-made wood board, the size of the model is in proportion to the size actually required by the signboard.
S2: dividing the mold of the uppermost step layer into one or more regional components with different identification tags.
S3: covering the surfaces of the main portion and each region of the uppermost step layer with rubbing material to obtain an extension unit of the main portion and plane extension units corresponding to every region of the uppermost step layer, each plane extension unit is labeled with a tag as same as that of the regional component corresponding thereto.
   Specifically, sticky notes or paste paper are used as rubbing materials.
S4: based on the number and size of the step layers of the connecting portion of the signboard needed to be produced, scaling the plane extension units according to the size of the rubbing material in step S3; and trimming the scaled plane extension units so that the plane extension units connected according to the tags will have a shape similar to that of the mold of the uppermost step layer.
   Specifically, take enlarging the plane extension unit in scale according to the size ratio in S3 as an example. After enlarge in scale, the enlarged plane extension units are trimmed to ensure that the plane extension units connected according to the tags will have a shape similar to that of the mold of the uppermost step layer, only the size is enlarged in scale. Specially, the side of the plane extension unit needed to be connected to the edge of the main portion is cut properly, and the interface of each plane extension unit is cut properly, so that the connections of the connected plane extension units are not deformed in view of the mold. For the connecting portion made in the method above, step layers are gradually enlarged from top to bottom. If the plane extension unit is shrinked in scale according to the size ratio in S3, the step layers in the finished connecting portion are shrinked gradually from top to bottom. For the signboard with connecting portion having a plurality of step layers, step S4 may be repeated. The plane extension unit is scaled in accordance with the size ratio in step S3 and appropriately modified to obtain plane extension units corresponding to each step layer. When trimming plane extension units of each region components of middle step layers, it is needed to ensure that the size of upper edge of the step layer formed by connecting according to the tags should match the size of lower edge of the upper step layer connected to the step layer, so that these two step layers can be connected regularly; and the size of the lower edge of an intermediate step layer should match the size of upper edge of the step layer lower to intermediate step layer, so that these two step layers can be connected regularly.
S5: cutting the scaled and trimmed plane extension units, then labeling them with tags as same as that of the plane extension units corresponding thereto, and cutting the board as the main portion needs;
S6: welding the boards corresponding to the main portion and each step layers according to the order of the tags based on the signboard pattern to form the main portion of the upper unit of the three-dimensional signboard identifying the shape of the identification and the connecting portion as a whole; and
S7: cutting the sidewall boards with required length and width from the raw board according to the size of the bottom edge of the downmost step layer connected to the sidewall; and welding the sidewall boards with the downmost step layer to form the whole three-dimensional signboard.

In this example the welding process for the components is argon-arc welding, electric welding, aluminium soldering, or tin soldering etc.. Before or after welding each component, the plane extension unit corresponding to the main portion or the sidewall configured to be in the type of hollowed is perforated. The hole can be any shape, such as circles, triangles, polygons, grids, heart-shaped, and the like. Moreover, in order to provide durable signboard, the step layers and the sidewall are made of metal; and the main portion is made of plexiglass plate material or material with better transmittance to enhance translucency.

According to the embodiments above, the embodiments of the present invention presents the shape of the signboard with the main portion; and the connecting portion composed by step layers in stack is provided to connect the main portion with the sidewall; and the connecting portion is supported by the sidewall to enhance stereoscopic effect. The connecting portion and the side wall are made of metal, so that the signboard has better display effect in the daytime, and is more durable. In order to improve the display effect at night, mounting plate with light-emitting elements attached thereto is provided in the bottom of the sidewall; the main portion is made of transparent material; and at least parts of the regions of the connecting portion and the side walls is perforated for revealing light and displaying signboard profile clearly, so as to provide more accurate identifying effect thereof. In the manufacture method described above, only one mold is needed to make the stacked step layers; the size of each of the step layers is scaled according to the mold; materials is cut from the raw boards; then finished by welding; and thus shorten the production process, save the material, and the produced signboard is more beautiful.

The disclosures above are only preferred embodiments of the present invention. It should be noted that for those skilled in the art, without departing from the technical principles of the present invention as defined in the appended claims, it is also possible to make numbers of modifications and variations, which should be considered as within the protection scope of the present invention as defined in the appended claims.

### Industrial Application

For the signboard provided by the technical solutions above, the shape of the signboard is presented by the main portion; the main portion is connected to the side walls by step layers in stack; and the connecting portion are supported by the side walls to enhance stereoscopic effect. The connecting portion and the side wall are made of metal, so that the signboard has better display effect in the daytime, and is more durable. In order to improve the display effect at night, mounting plate with light-emitting elements attached thereto is provided in the bottom of the sidewall; the main portion is made of transparent material; and at least parts of the regions of the connecting portion and the side walls is perforated for revealing light and displaying signboard profile clearly, so as to provide more accurate identifying effect thereof. In the manufacture method described above, only one mold is needed to make the stacked step layers; the size of each of the step layers is scaled according to the mold; materials is cut from the raw boards; then finished by welding; and thus shorten the production process, save the material, and the produced signboard is more beautiful.

## Claims

1. A three-dimensional signboard which forms the shape of a character, comprising :
an upper unit and a lower unit which are connected to each other;
the upper unit comprising a main portion (1), wherein the main portion (1) reflects each stroke of the shape of the character of the signboard and thereby presents the shape of the three-dimensional signboard;
the lower unit comprising a sidewall (3) connected to the main portion (1), wherein the sidewall (3) encircles the main portion (1) for supporting the main portion (1), and a cavity is formed therebetween; and
a connecting portion (2) arranged between the main portion (1) and the sidewall (3), wherein the connecting portion (2) comprise a plurality of step layers arranged in stack, and the step layer each comprises an upper step plate and a lower step plate which are connected to each other,
wherein an edge of the upper step plate of a lower step layer in the plurality of step layers is connected to an edge of the lower step plate of an upper step layer connected to the lower step layer,
wherein the size of the lower step layer is larger than the size of the connected upper step layer, such that the step layers of the plurality of step layers arranged in stack are gradually enlarged from top to bottom,
**characterised in that**
the sidewall and the connecting portion are made of metal, and the surfaces of the sidewall and the connecting portion, or a part or the entire region thereof are perforated,
wherein the surface of the main portion is flat, and
wherein the surface of the main portion or a part or the entire region thereof is perforated.

2. The three-dimensional signboard as claimed in claim 1, **characterized in that**, a bottom of the sidewall is provided with a mounting plate, on which a light-emitting element is mounted.

## Patentansprüche

1. Ein dreidimensionales Schild, welches die Form eines Zeichens ausbildet, aufweisend:
eine obere Einheit und eine untere Einheit welche miteinander verbunden sind;
wobei die obere Einheit einen Hauptteil (1) aufweist, wobei der Hauptteil (1) widerspiegelt jeden Strich der Form des Zeichens des Schilds und dabei darstellt die Form des dreidimensionalen Schilds;
wobei die untere Einheit eine Seitenwand (3) aufweist, welche verbunden ist mit dem Hauptteil (1), wobei die Seitenwand (3) den Hauptteil (1) umgibt zum Unterstützen des Hauptteils (1) und eine Aussparung dazwischen ausgebildet ist; und
einen Verbindungsteil (2), angeordnet zwischen dem Hauptteil (1) und der Seitenwand (3), wobei der Verbindungsteil (2) aufweist eine Mehrzahl von Stufen Schichten, welche stapelweise angeordnet sind, und jede Stufen Schicht aufweist
eine obere Stufen Platte und eine untere Stufen Platte, die miteinander verbunden sind,
wobei eine Kante der oberen Stufen Platte einer unteren Stufen Schicht in der Mehrzahl von Stufen Schichten verbunden ist mit einer Kante der unteren Stufen Platte einer oberen Stufen Schicht, welche mit der unteren Stufen Schicht verbunden ist,
wobei die Größe der unteren Stufen Schicht größer ist als die Größe der verbundenen oberen Stufen Schicht, sodass die Stufen Schichten der Mehrzahl von stapelweise angeordneten Stufen Schichten graduell von oben nach unten vergrößert sind,
**dadurch gekennzeichnet, dass**
die Seitenwand und der Verbindungsteil aus Metall gebildet sind und die Oberflächen der Seitenwand und des Verbindungsteils, oder ein Teil oder der ganze Bereich davon perforiert sind,
wobei die Oberfläche des Hauptteils flach ist, und
wobei die Oberfläche des Hauptteils oder ein Teil oder der ganze Bereich davon perforiert ist.

2. Das dreidimensionale Schild wie in Anspruch 1 beansprucht, **dadurch gekennzeichnet, dass** ein Boden der Seitenwand mit einer Montageplatte bereitgestellt wird, auf der ein Licht-emittierendes Element montiert ist.

## Revendications

1. Panneau de signalisation en trois dimensions qui constitue la forme d'un caractère, comprenant :
une unité supérieure et une unité inférieure qui sont reliées l'une à l'autre ;
l'unité supérieure comprenant une partie principale (1), dans lequel la partie principale (1) reflète chaque trait de la forme du caractère du panneau de signalisation et présente ainsi la forme du panneau de signalisation en trois dimensions ;
l'unité inférieure comprenant une paroi latérale (3) reliée à la partie principale (1), dans lequel la paroi latérale (3) encercle la partie principale (1) pour supporter la partie principale (1), et une cavité est formée entre elles ; et
une partie de liaison (2) agencée entre la partie principale (1) et la paroi latérale (3), dans lequel la partie de liaison (2) comprend une pluralité de couches d'échelon agencées en pile et la couche d'échelon comprend chacune une plaque d'échelon supérieure et une plaque d'échelon inférieure qui sont reliées l'une à l'autre,
dans lequel un bord de la plaque d'échelon supérieure d'une couche d'échelon inférieure dans la pluralité de couches d'échelon est relié à un bord de la plaque d'échelon inférieure d'une couche d'échelon supérieure reliée à la couche d'échelon inférieure,
dans lequel la taille de la couche d'échelon inférieure est plus grande que la taille de la couche d'échelon supérieure reliée, de manière que les couches d'échelon de la pluralité de couches d'échelon agencées en pile soient progressivement agrandies du haut vers le bas,
**caractérisé en ce que** la paroi latérale et la partie de liaison sont réalisées en métal, et les surfaces de la paroi latérale et de la partie de liaison, ou une partie ou la région complète de celles-ci, sont perforées,
dans lequel la surface de la partie principale est plate, et
dans lequel la surface de la partie principale ou une partie ou la région complète de celle-ci est perforée.

2. Panneau de signalisation en trois dimensions selon la revendication 1, **caractérisé en ce qu'**une partie inférieure de la paroi latérale est munie d'une plaque de montage, sur laquelle est monté un élément d'émission de lumière.
